(19) Europäisches Patentamt

European Patent Office

Office européen des brevets

(11) **EP 1 066 172 B1**

(12) **EUROPEAN PATENT SPECIFICATION**

(45) Date of publication and mention
of the grant of the patent:
**22.02.2006 Bulletin 2006/08**

(51) Int Cl.:
***B60Q 3/00*** (2006.01)    ***F21V 8/00*** (2006.01)
***G02B 6/00*** (2006.01)

(21) Application number: **98965382.9**

(22) Date of filing: **09.12.1998**

(86) International application number:
**PCT/US1998/026152**

(87) International publication number:
**WO 1999/030192 (17.06.1999 Gazette 1999/24)**

(54) **OPTICAL WAVEGUIDE STRUCTURES FOR VEHICLE LIGHTING**

OPTISCHE WELLENLEITER FÜR FAHRZEUGBELEUCHTUNG

STRUCTURES DE GUIDES D'ONDES OPTIQUES POUR ECLAIRAGE AUTOMOBILE

(84) Designated Contracting States:
**DE ES FR GB IT**

(30) Priority: **09.12.1997  US 69118 P**
**20.01.1998  US 9836**
**20.04.1998  US 62766**
**02.07.1998  US 109051**
**02.07.1998  US 109052**
**26.08.1998  US 140281**
**10.09.1998  US 150672**
**21.09.1998  US 157373**
**09.10.1998  US 168890**

(43) Date of publication of application:
**10.01.2001 Bulletin 2001/02**

(73) Proprietor: **Federal-Mogul Ignition Company**
**Southfield,**
**Michigan 48034 (US)**

(72) Inventors:
• **HULSE, George, R.**
**Cookeville, TN 38506 (US)**
• **BUCHER, Lloyd, Keith**
**Cookeville, TN 38501 (US)**
• **ANDERSON, James, Burr**
**Cookeville, TN 38506 (US)**
• **WOODWARD, Ronald, O.**
**Yorktown, VA 23693 (US)**
• **YOUNG, Joe, P.**
**Sparta, TN 38583 (US)**

(74) Representative: **Harrison Goddard Foote**
**Orlando House**
**11c Compstall Road**
**Marple Bridge**
**Stockport SK6 5HH (GB)**

(56) References cited:
EP-A- 0 143 856        EP-A- 0 515 921
EP-A- 0 571 729        EP-A- 0 595 338
EP-A- 0 650 081        EP-A- 0 711 949
DE-A- 3 704 469        GB-A- 2 297 928
US-A- 4 432 039        US-A- 4 585 302
US-A- 4 631 642        US-A- 4 807 955
US-A- 4 868 718        US-A- 4 912 605
US-A- 5 199 091        US-A- 5 206 562
US-A- 5 271 077        US-A- 5 278 731
US-A- 5 343 367        US-A- 5 365 413
US-A- 5 438 485        US-A- 5 452 186
US-A- 5 560 698        US-A- 5 590 945
US-A- 5 598 497        US-A- 5 647 657
US-A- 5 791 756        US-A- 5 812 714

• **PATENT ABSTRACTS OF JAPAN vol. 1995, no.**
**07, 31 August 1995 (1995-08-31) & JP 07 104289**
**A (TOSHIBA LIGHTING & TECHNOL CORP), 21**
**April 1995 (1995-04-21)**
• **DATABASE WPI Section PQ, Week 199707**
**Derwent Publications Ltd., London, GB; Class**
**Q16, AN 1997-072705 XP002901093 & JP 08**
**318783 A (KANTO JIDOSHA KOGYO KK), 3**
**December 1996 (1996-12-03)**

## Description

Technical Field

The invention relates to distributed lighting systems.

Background

Distributed lighting systems distribute light from one or more light sources in central locations to one or more remote locations. A distributed lighting system promises several advantages over conventional lighting techniques, including low power consumption, extended life, heat reduction where the light is emitted, and increased design flexibility.

Summary

The invention provides a distributed lighting system (DLS) for use, for example, in an automobile, and components of such a system. Issues associated with incorporating a distributed lighting system into an automobile are discussed by Hulse, Lane, and Woodward in "Three Specific Design Issues Associated with Automotive Distributed Lighting Systems: Size, Efficiency and Reliability," SAE Technical Paper Series, Paper No. 960492, which was presented at the SAE International Congress and Exposition, Detroit, MI, February 26-29, 1996, and Hulse and Mullican in "Analysis of Waveguide Geometries at Bends and Branches for the Directing of Light," SAE Technical Paper Series, Paper No. 981189.

A practical distributed lighting system for an automobile must address size, efficiency, and reliability issues. To this end, a DLS may employ focus-less optics components, such as collector elements and waveguides. These components are inexpensive to manufacture, since they can be formed from plastic (acrylic, for example) in an injection molding process. In addition, they have high collecting efficiency and are very compact. For example, a collector element may be smaller than one cubic inch (16.4 cubic centimeters). Components that must handle high heat levels (e.g., components that are placed in proximity to the light source) may require a ventilation system or may include portions formed from heat resistant materials, such as glass or Pyrex™.

A high intensity discharge (HID) source may act as a primary light source for a particular lighting function, such as a headlamp and as a light source for other lighting functions throughout the vehicle as subsystems. Light sources other than a HID source, such as high intensity infrared (HIR), halogen, cartridge bulbs, printed circuit (PC) bulbs, and other gas discharge and incandescent bulbs, may be used. The subsystem may employ focus-less optics to receive and transmit light from the light source. Focus-less optics components include optical waveguides and collector elements, such as are described below and in U.S. Patent Nos. 5,791,756, entitled "Distributed Lighting System" and 5,812,714, entitled "Optical Waveguide Elements for a Distributed Lighting System".

A vehicle distributed lighting system(DLS) may incorporate different types of optical waveguide structures to distribute light throughout the vehicle, including joints, elements with epoxy coatings, pinched end collector portions, integrated installation snaps, integrated input optics and integrated output lenses. The DLS may also include waveguide structures to provide illumination to portions of the vehicle interior including particularly parts illuminated from, and in, a door panel.

A distributed lighting system for the interior of a vehicle is described in US Patent No. 5,647,657 wherein a plurality of electrically activated light sources each have reflectors for concentrating light into respective distributing light conductors, the light sources and associated conductors being distributed spatially to reduce the lengths of individual conductors and operated in groups to achieve illumination of different areas.

In accordance with the present invention, an optical waveguide assembly for distributing light within a vehicle door panel comprises a hub portion or trunk waveguide, arranged to be connected to receive light from a light source and propagate received light through internal reflection to a plurality of waveguides extending therefrom, said waveguides being arranged to extend in use with a said vehicle door panel, to lighting outputs of the door panel, and is characterised by support arms coupled to, and extending between, the waveguides operable to support the waveguides with respect to the panel in use.

The waveguides and support arms may be formed from a single piece of solid material. The solid material may be injection molded plastic.

The optical waveguide assembly may include a compact illuminator as the light source. The compact illuminator may include a housing having reflective interior surfaces, a bulb positioned within the housing, and an optical waveguide output port that holds an optical waveguide in position to receive light from the bulb.

The compact illuminator may include a housing having open ends configured to receive waveguides and a reflector positioned within the housing. The reflector may include open end portions, a central portion between the end portions, a light source positioned within the central portion, and side walls extending between the end portions and at least partially enclosing the central portion. The side walls may protrude inward toward the light source.

The optical waveguide assembly may have lighting output elements positioned at the ends of the branch waveguides. The lighting output element may be an optical waveguide output element. The waveguide output element may have an input face and a transmission portion extending from the input face. The transmission portion may widen at an end to form a conical end portion having a convex lens at an end of the conical end portion.

The lighting output element may be a waveguide bend. The waveguide bend may have a bend ratio that is less than 3:1 or less than 1:1.

In another form of optical waveguide assembly for distributing light within a vehicle panel the hub portion includes a cylindrical sleeve arranged to receive light from, and accommodate, a light source. The sleeve has a central axis. A waveguide collar is formed from a solid, planar block of material having a central portion to accommodate and surround the sleeve and output branches extending away from the central portion, and comprising said plurality of waveguides. Alternatively, the sleeve may be omitted and the source be accommodated in the central portion directly.

In accordance with another aspect of the present invention, a vehicle door panel is characterised by the optical waveguide assembly defined in claim 1.

Furthermore, a vehicle having a door with a bottom door surface that meets a floor surface of the vehicle when the door is closed, the floor surface being displaced from the underside of the vehicle, is characterised by having a vehicle door formed as set out in the preceding paragraph.

The vehicle may have, associated with a said door panel thereof, an optical waveguide assembly in which at least one of the plurality of waveguides extends to the bottom surface of the door and the floor portion may include a waveguide section extending to the vehicle underside, disposed to meet the bottom surface of the door when closed so that light may pass from the door waveguide and floor section of the vehicle to illuminate the area beneath the vehicle and, when the door is opened, to illuminate the area beneath the door.

A panel DLS provides several advantages. For example, it eliminates the need for electrical wiring, multiple light bulbs, connectors and PC boards, within the panel. The single, high reliability light source in the DLS can meet all of the lighting requirements for particular lighting functions. The source may be accessible through an access port in the panel, so that it can be easily replaced without removing the panel. In addition, the light source may be located in another position within the vehicle, such as under the dashboard. Light may be carried from the light source to the panel waveguide assembly through a waveguide, waveguide joint, or optical fiber that passes from the vehicle body into the panels. Such a configuration reduces the electrical wiring required between the vehicle body and the panels, which reduces complexity and manufacturing costs. In addition, the panel waveguide may be formed as a single piece of injection molded plastic, which further reduces manufacturing costs.

Other features and advantages will be apparent from the following detailed description, including the drawings, and from the claims.

Brief Description of the Drawings

Figs. 1-5 show compact illumination cartridges.
Fig. 6 is a top view of an optical waveguide.
Figs. 7 and 8 are side and bottom views of a waveguide joint.
Fig. 9 is a cross-section view of an epoxy-coated optical waveguide.
Figs. 10-12 are side views of non-tapered and tapered waveguide inputs.
Figs. 13 and 14 are side views of waveguide sections having integrated installation components and an integrated output structure.
Fig. 15 is a side view of a leaky waveguide bend and focusing lens.
Fig. 16 is a perspective view of an optical manifold.
Fig. 17 is a side view of an optical manifold.
Fig. 18 is a perspective view of a waveguide collar with four arms.
Fig. 19 is a top view of the waveguide collar of Fig. 18.
Fig. 20 is a side view of a light source with a cylindrical sleeve.
Figs. 21 and 22 are perspective views of light sources with cylindrical sleeves.
Fig. 23 is a side view of stacked waveguide collars.
Fig. 24 is a top view of a waveguide collar.
Fig. 25 is a side view of a waveguide collar.
Fig. 26 is a perspecctive view of a waveguide collar from above.
Fig. 27 is a top view of a waveguide collar.
Fig. 28 is a top view of a waveguide collar with two arms.

Figs. 29 and 30 are perspective views of waveguide collars with two arms and integrated output lenses.

Fig. 31 is a light ray diagram for a waveguide collar with two arms and two output lenses.

Fig. 32 is a perspective view of a waveguide structure having embedded waveguides.

Fig. 33 is a top view of a waveguide structure having embedded waveguide and a cylindrical sleeve.

Fig. 34 is a perspective view of a waveguide structure having raised waveguides with angled input faces.

Fig. 35 is a light ray diagram for the waveguide structure of Fig. 34.

Fig. 36 is a side light ray diagram for the waveguide structure of Fig. 34.

Fig. 37 is a side view of raised waveguides mounted on a top surface of a waveguide structure.

Fig. 38 is a side view of embedded waveguides extending from the top and bottom surfaces of a waveguide structure.

Fig. 39 is an end view showing a channel beneath a waveguide mounted on the top surface of a waveguide structure.

Fig. 40 is an end view showing a channel with inclined sides beneath a waveguide mounted on the top surface of a waveguide structure.

Fig. 41 is a side view of a vehicle door panel with a distributed lighting system.

Fig. 42 is a perspective view of a vehicle door panel waveguide assembly.

Fig. 43 is a side view of a vehicle door panel waveguide assembly.

Figs. 44-46 are perspective views of the junction between branch waveguides and support arms in a vehicle door panel waveguide assembly.

Figs 47 and 48 are block diagrams of a combination security/puddle light.

Description

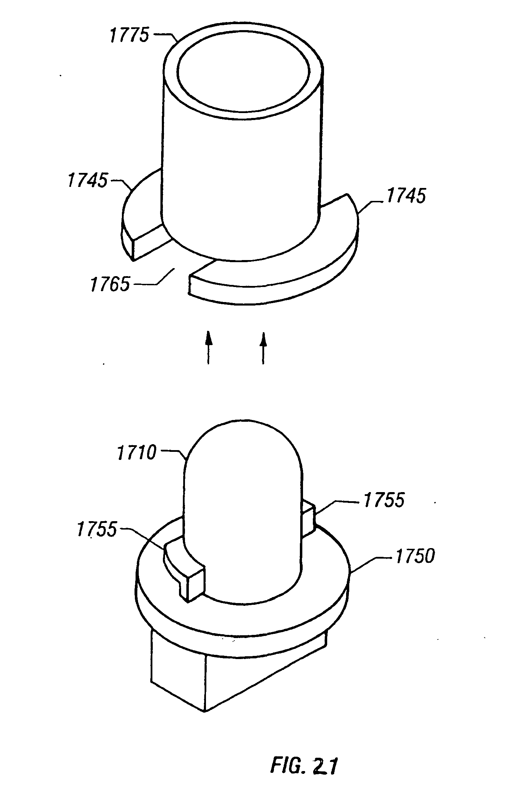

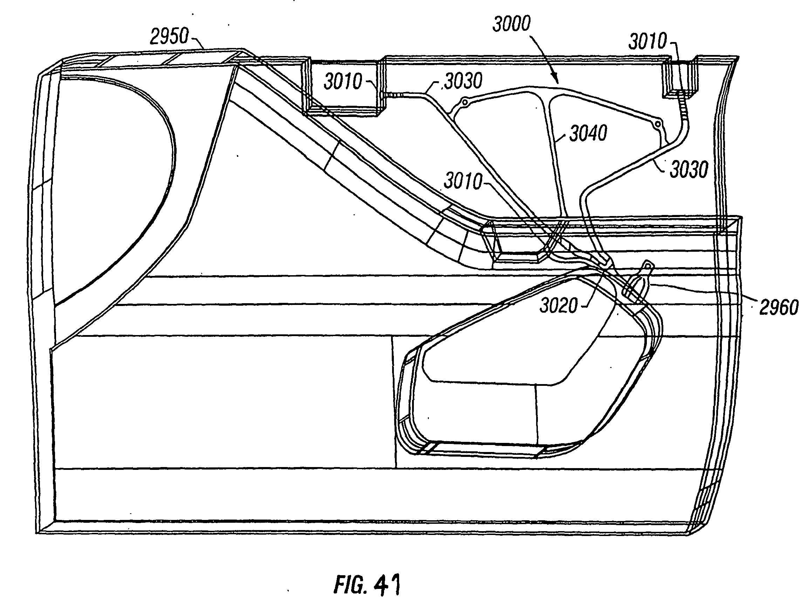

In accordance with the invention an optical waveguide assembly is suitable for distributing light within a door panel of a vehicle, and possibly permits emission of light from the door. Forms of such optical waveguide assembly are described in detail hereinafter with respect to Figures 41 to 48 but in order to fully appreciate the structures used in the assembly, descriptions will first be given of various optical elements employable in such assembly, with reference to Figures 21 to 60.

Compact Illuminator

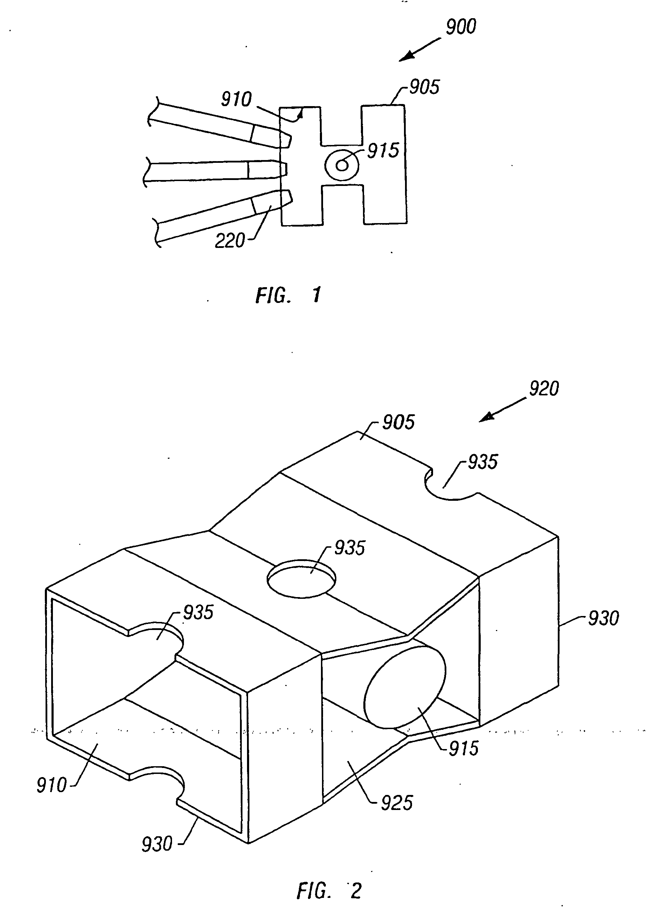

Referring to Fig. 1, a compact illuminator 900 may be employed as a light source. The illuminator 900 includes a housing 905 having reflective, heat-dissipating interior surfaces 910. A light source 915 is positioned in the center of the housing 905. Waveguide collector elements 220 are positioned around the light source.

As shown in Fig. 2, another configuration of the compact illuminator 920 includes a reflector 905 with reflective, heat-dissipating surfaces 910. The reflective surfaces 925 nearest the light source 915 are angled to more efficiently direct light to the output ports 930. However, the surfaces 925 may also be curved (e.g., parabolic or elliptical in shape) rather than planar. The reflector 905 includes vent holes 935 to reduce heat in the compact illuminator 920. The reflector 905 is easily formed from one or two pieces of stamped metal, resulting in low manufacturing costs. The reflective surfaces 925 may be formed by vapor deposition on plastic or other materials.

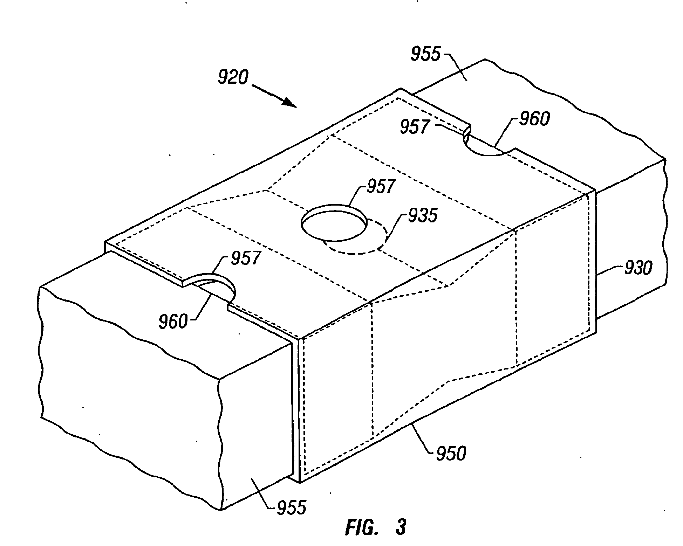

As shown in Fig. 3, the compact illuminator 920 may have a housing 950 that surrounds the reflector 905. The housing may extend beyond the edges of the output ports 930 to provide support for optical waveguides 955 positioned at the output ports 930. The waveguides 955 may be abutted to rectangular output ports 930 and may have input faces that are the same size as the output ports 930. Alternatively, the output ports 930 and waveguides 955 may be round. In addition, fiber optic conduits may be used in place of the waveguides 955. Such a configuration provides for an efficient collection of light from the light source. The housing 950 includes vent holes 957 that are aligned with the vent holes 935 of the reflector 905.

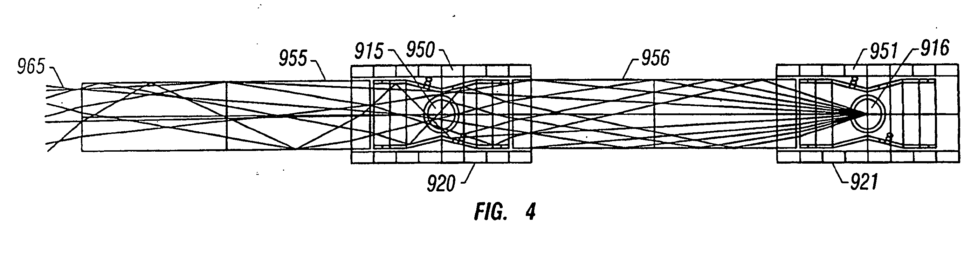

Fig. 4 shows an example of light rays 965 passing through a network of redundant compact illuminators 920 and 921. The illuminators have housings 950 and 951 and are connected by optical waveguides 955 and 956. The illuminators also may be joined directly without an intervening waveguide. The light rays 965 initiate at a first light source 916 in the first illuminator 921. The light rays 965 pass through a waveguide 956 connected to the second illuminator 920, pass through the second illuminator 920 and are output to a second waveguide 955. The second waveguide 955 may lead to a distribution network or to an output device such as an interior light for a vehicle.

Such a configuration conveniently provides light source redundancy. If both light sources 915 and 916 are functioning, then a portion of the light from the second light source 915 combines with the light received from the first light source 916 within the second illuminator 920. The combined light is output to the second waveguide 955. If one of the light sources fails, the other source will continue to provide light to the output device or distribution network, though at a reduced light level.

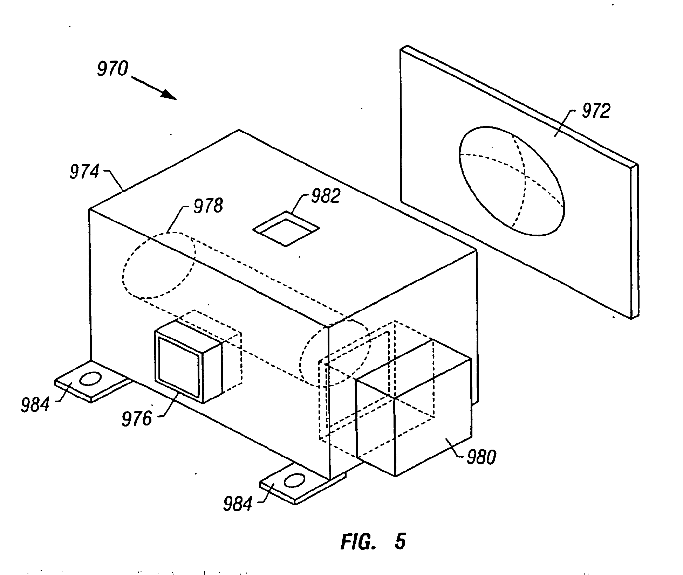

Fig. 5 shows a dual-source, hybrid compact illuminator 970 that provides a direct lighting function through a lens 972 covering one side of the housing 974 and a distributed lighting function through a waveguide output port 976.

The housing 974 may be formed of metal or plastic (e.g., injected molded plastic). The hybrid compact illuminator 970 has reflective interior walls and a primary light source 978, such as a cartridge bulb. The interior walls may be curved to form a reflector to increase light collection efficiency. The waveguide output port 976 is configured so that an optical waveguide may be inserted into the port and held in position with an adhesive, such as epoxy, or by mechanical means, such as a waveguide connector. The waveguide output port 976 is positioned so that the input face of the inserted optical waveguide efficiently receives light from the primary light source. The end of the inserted waveguide may have optical collector elements or lenses formed on the input face, as described above.

The dual-source hybrid compact illuminator 970 also has a secondary light source, e.g., a cartridge bulb or a PC bulb, in a compartment 980 that protrudes from the side of the housing 974 (a single-source, hybrid compact illuminator having only a primary light source is also possible). The secondary light source may be used for lighting functions that require a lower power, longer life light source. The compartment 980 may have a waveguide output port to provide a distributed lighting function or an output lens to provide a direct lighting function.

Alternatively, the compartment 980 may be open to the interior of the housing and may extend into the housing. The compartment may be positioned so that the secondary light source provides illumination for the direct and distributed lighting functions in case of failure of the primary light source 978. Vent holes 982 and installation mounting holes 984 also are provided.

The compact illuminator has a compact size, stays cool, and reduces lamp placement error, which increases efficiency. The compact illuminator also provides a convenient building block for a redundant network to provide interior or exterior lighting functions and may easily be installed in a distributed lighting system. In addition, the hybrid compact illuminator provides both direct and distributed lighting functions.

By combining two sources in a single unit, the dual-source, hybrid compact illuminator provides both light for several lighting functions, as well as light source redundancy, while lowering complexity and manufacturing costs. For example, a single circuit may be used to drive the two sources. In addition, the dual-source unit reduces the number of parts in a system, which in turn reduces cost and complexity.

## Waveguide Structures

The DLS incorporates different types of optical waveguide structures to distribute light throughout the vehicle. These include joints, elements with epoxy coatings, pinched end collector portions, integrated installation snaps, integrated input optics and integrated output lenses. The DLS also includes waveguide structures to provide illumination to portions of the vehicle interior, including cup holders, assist grips, and storage pockets.

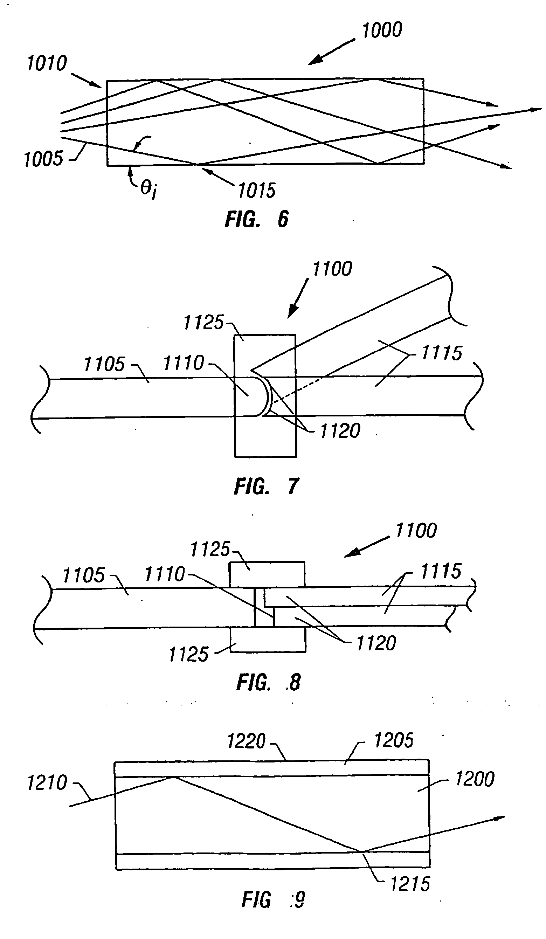

Different types of waveguide structures may be used in the DLS to transmit light from the sources to the lighting outputs. Referring to Fig. 6, a basic waveguide 1000 may be formed from optically transparent material such as acrylic or glass. If the waveguide is formed from acrylic or a similar material, it can be manufactured using an injection molding process. The manufacture of waveguide elements using injection molding results in very low manufacturing costs compared to fiber optics. In addition, molded acrylic waveguide elements are more rigid than fiber optics, can be installed by robots, and generally do not require maintenance. Waveguide elements can also achieve much smaller bend radii than fiber.

A light ray 1005 enters through the input face 1010 proceeds through the waveguide 1000 until the light ray 1005 reaches an outer surface 1015 of the waveguide 1000 (i.e., an interface between the material of the waveguide 1000 and air). At the outer surface 1015, light is reflected in accordance with Snell's law. If the angle of incidence ($\theta_i$) of the light ray 1005 at the outer surface 1015 is less than a threshold referred to as the critical angle ($\theta_c$), then the light ray 1005 is reflected internally, with no light escaping. This phenomenon is known as total internal reflection. The critical angle depends on the index of refraction of the material of which the waveguide is composed relative to that of the material surrounding the waveguide,(e.g., air). For example, if the waveguide were made from acrylic, which has an index of refraction of approximately 1.5, and surrounded by air, the critical angle, $\theta_c$, would be:

$$\theta_c = \text{arcsin } (n_a/n_b) = \text{arcsin } (1/1.5) = 41.8$$

where $n_a$ is the index of refraction of air (1.0) and $n_b$ is the index of refraction of acrylic (1.5).

## Waveguide Joint

Referring to Figs. 7 and 8, a waveguide joint 1100 may be used to distribute light in the DLS. For example, the joint may be used to provide light to a door of the vehicle. The waveguide joint 1100 has a trunk section 1105 with a convex curved end 1110. Branch sections 1115 having convex curved ends 1120 adjoin the trunk section 1105. The branch sections may be held in place by a plastic band 1125 surrounding the joint region or by epoxy or snaps. Light input to the trunk section 1105 is essentially split among the branches 1115. The branches 1115 may be positioned to carry light to different sections of the vehicle. With this configuration, it is possible to reconfigure the branches 1115 in the event of design changes.

Epoxy that has an index of refraction approximately equal to that of the waveguide, i.e., that is index-matched, may be used to hold the branches 1115 in place. The joint 1100 may have only a single branch 1115 that is used to change the direction of the trunk 1105 or to provide a hinged connection. A hinged connection using the joint 1100 may be installed, for example, in a car door. Index-matched fluid may be used to lubricate and reduce discontinuity at the interface between the trunk 1105 and the branch 1115, which will reduce the loss through the joint 1100.

Epoxy Coating

Referring to Fig. 9, a waveguide core 1200 may be encased in a layer of epoxy 1205. The epoxy 1205 coating 1205 may be applied by dipping the waveguide core 1200 (which may be formed, for example, from acrylic) in a reservoir of epoxy and allowing the coating to dry or by spraying. The epoxy 1205 has a lower index of refraction than the waveguide 1200, so that most of the light rays 1210 passing through the waveguide core 1200 are internally reflected at the acrylic/epoxy interface 1215. A portion of the light rays are reflected at the outer epoxy/air interface 1220. The distribution of light in the waveguide peaks at the center of the waveguide and diminishes toward the edges of the waveguide. Overall, a significant portion of the light is confined within the waveguide core and only a small portion of the light reaches the outer epoxy/air boundary 1220.

The epoxy coating 1205 offers several advantages compared to an uncoated waveguide. For example, contaminants on the surface of an uncoated waveguide can cause light at the waveguide/air interface to be scattered and transmitted outside of the waveguide instead of being internally reflected, which increases loss in the uncoated waveguide. The epoxy layer 1205 increases the distance between the contaminants and the waveguide core 1200, which reduces the amount of light that reaches the waveguide/air interface 1220 of the coated waveguide. In addition, plastic coatings can be applied to the outside surfaces of the epoxy layer, and clamps and other fixtures can be attached to the outside surfaces with reduced effect on light transmission through the waveguide 1200. One also could use a waveguide formed from polycarbonate (which has an index of refraction of 1.58) with an outer coating of epoxy (which has an index of refraction of 1.4). Alternatively, one could use a waveguide having a glass core and an outer coating having a lower index of refraction.

Waveguide with Pinched End

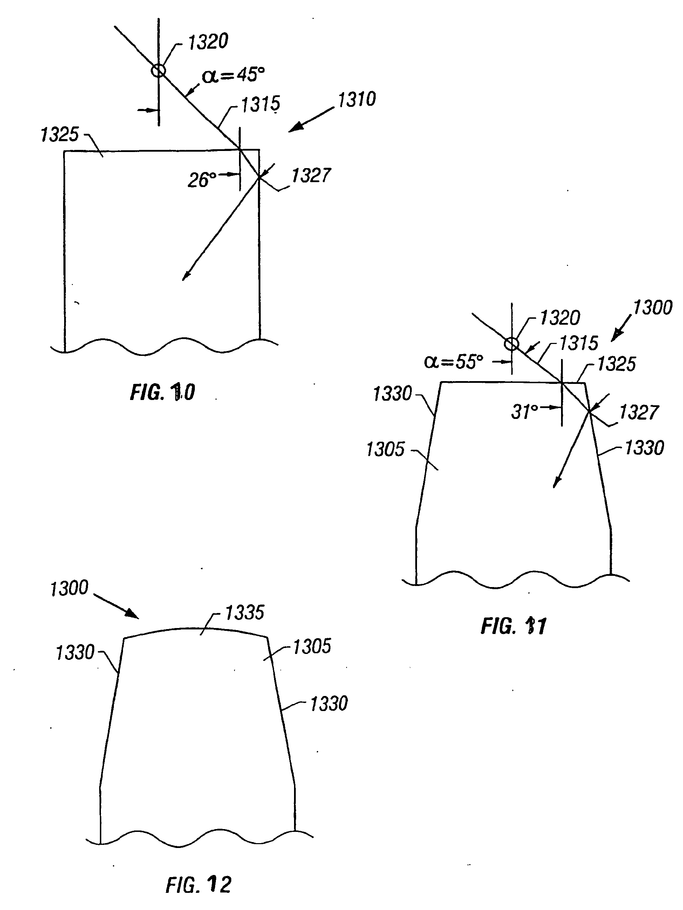

As shown in Figs. 10-12, a waveguide 1300 may have a pinched end that acts as a collector element 1305. The collector element 1305 increases the acceptance angle ($\alpha$) of the waveguide 1300 and thereby increases light collection efficiency. The end of the waveguide 1300 may be pinched in two dimensions to form an essentially trapezoidally shaped collector element 1305. The collector element 1305 may be formed on the end of a waveguide 1300 having a cross-section that is rectangular, round, or of some other shape.

For example, Fig. 10 shows a waveguide 1310 without a pinched end. Light 1315 from a light source 1320 enters the waveguide 1310 at an angle of 45°. At the input face 1325, the light is bent in accordance with Snell's Law to form an angle of 26° with respect to a direction perpendicular to the input face 1325. The light reaches the outer edge 1327 of the waveguide at an angle of 26° and is confined within the waveguide by internal reflection.

Fig. 11 shows a waveguide 1300 with a pinched end. Light enters the input face at an angle of 55° . Hence, the acceptance angle of the pinched waveguide 1300 can be made greater than the acceptance angle of the waveguide 1310 without the pinched end.

At the input face 1325, the light is bent to form an angle of 31° with respect to a direction perpendicular to the input face 1325. The light reaches the outer edge 1327 of the waveguide at an angle of 26° (since the inclined walls 1330 of the pinched portion are angled inward by 5°) and is confined within the waveguide by internal reflection.

As shown in Fig. 12, the pinched end of the waveguide 1300 may be formed so that an excess of material at the tip of the waveguide 1300 bulges outward to form a lens 1335 with a desired focal length. The lens 1335 focuses received light, further increasing the acceptance angle of the waveguide 1300.

Integrated Installation and Connection Elements

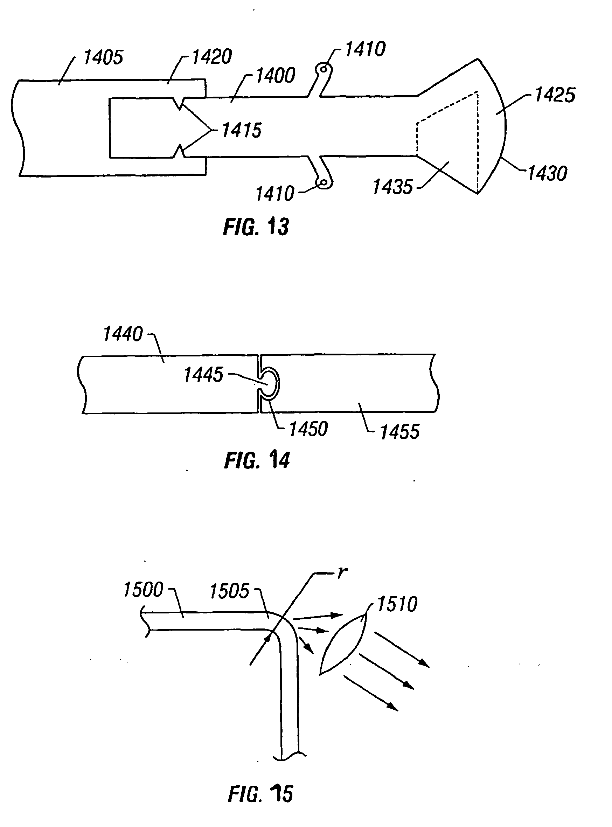

The waveguides may be formed as a set of standard components that may be easily interconnected and used as building blocks for different applications. For example, Fig.13 shows waveguides 1400 and 1405 having integrated installation elements, such as snaps 1410 and detents 1415. Snaps 1410 can be formed during the injection molding of the waveguide 1400 and provide a convenient means for securing the waveguide 1400 within the vehicle. The snaps are sized and angled to minimize light loss through the snap. For example, the snap may form a 60° angle with the waveguide (toward the direction that light is travelling though the waveguide). The vehicle may have brackets to receive the snaps 1410 or a screw may be inserted into a snap 1410 to secure the waveguide to a mounting surface. The detents 1415 enable the waveguide 1400 to be securely connected to another waveguide 1405 having an integrated claw structure 1420. Each waveguide may be formed with a detent 1415 at one end and a claw structure 1420 at the other.

Fig. 14 shows waveguides with integrated connection elements. A waveguide 1440 may have a key 1445 formed at one end. The key 1445 is configured to mate with a socket 1450 of another waveguide 1455. These connection elements may cause a loss of approximately 4% at each interface, however, the connection elements increase the ease with which waveguide components can be installed. Index-matched epoxy or fluid may be used at the interface to secure the connection and reduce losses.

In addition to the installation and connection elements, the waveguide 1400 widens at one end into an output element 1425 having a convex curved surface 1430. The curved surface 1430 of the output element 1425 essentially acts as a lens to provide a desired light output characteristic. The output element 1425 may form an illumination element for the vehicle, e.g., a courtesy light in the door of a vehicle. A portion of the widened waveguide end may be eliminated, leaving an air gap 1435, while maintaining desired output characteristics. The air gap 1435 decreases the weight and cost of the waveguide 1400.

Leaky Bend

Another configuration for an output element is shown in Fig. 15. A waveguide 1500 has a bend 1505 that is configured to allow a portion of the light travelling in the waveguide to escape at the bend 1505. A lens 1510 may be used to focus the light to form a desired beam pattern. The amount of light released at the bend 1505 (or reflected back toward the input) can be controlled by determining the inner radius (r) of curvature of the bend 1505 relative to the width (w) of the waveguide 1500. For example, a bend with a inner bend radius to waveguide width ratio (r/w) of 3:1 will result in a loss of less than 5% of the total light in the waveguide (the losses including light released at the bend and light reflected back toward the input). A bend ratio of 1:1 will result in a loss of approximately 30-35%, and a bend ratio of 0.1:1 will result in a loss of approximately 65-70%. Not all of the light lost in the waveguide enters the lens, however the amount of light entering the lens will be proportional to the amount of light released at the bend.

Optical Manifold

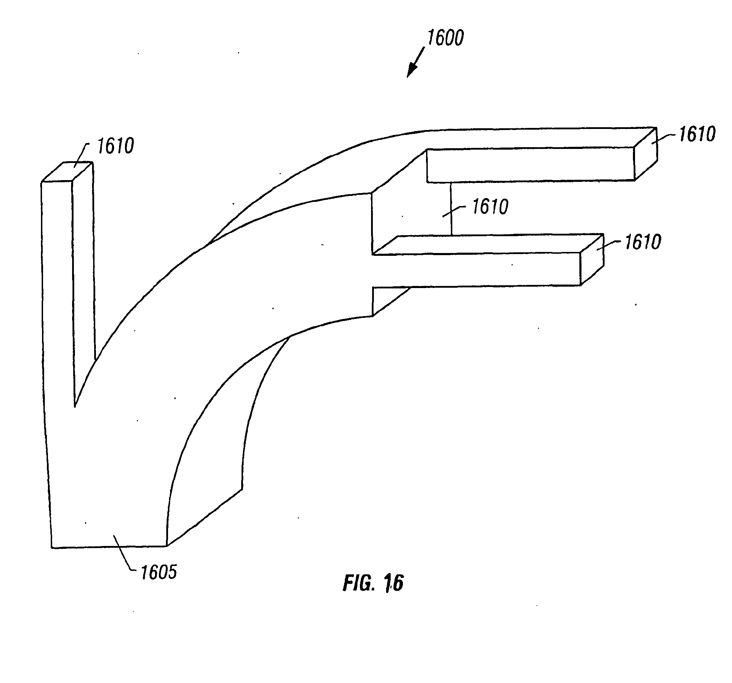

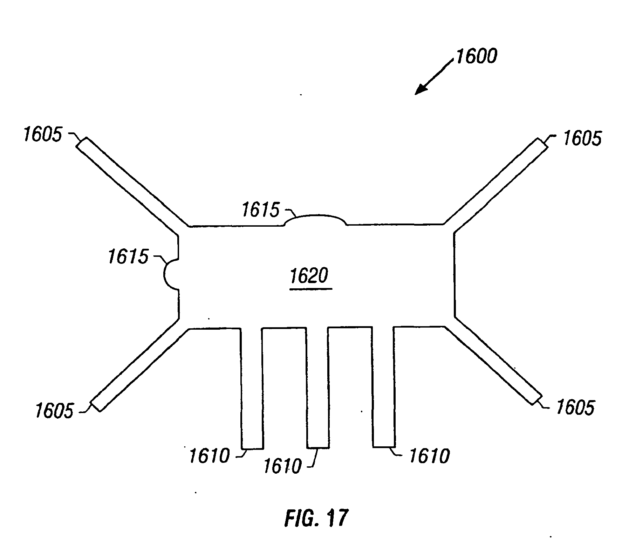

Referring to Figs. 16 and 17, an optical manifold 1600 is another useful building block for a DLS. Light enters the optical manifold 1600 through one or more inputs 1605 and is split to one or more of the output arms 1610. Alternatively, light may enter through one or more output arms 1610 and exit through the inputs 1605. The output arms 1610 may branch off at multiple points from the optical manifold in multiple directions to direct light to other subsystems of the DLS in various locations within the vehicle. The size of the output arms 1610 and their locations determines the proportion of the light input to the manifold that is split to each arm.

As shown in Fig. 17, the optical manifold 1600 may include integrated output elements 1615. The output element 1615 may be lens-like structures that provide lighting functions within the vehicle, such as a reading lights or dashboard lights. The manifold 1600 may have multiple input arms 1605 and output arms 1610, as well as a portion 1620 where light from the various inputs is combined. Each input and output may use colored filters to achieve desired lighting effects.

Waveguide Collar

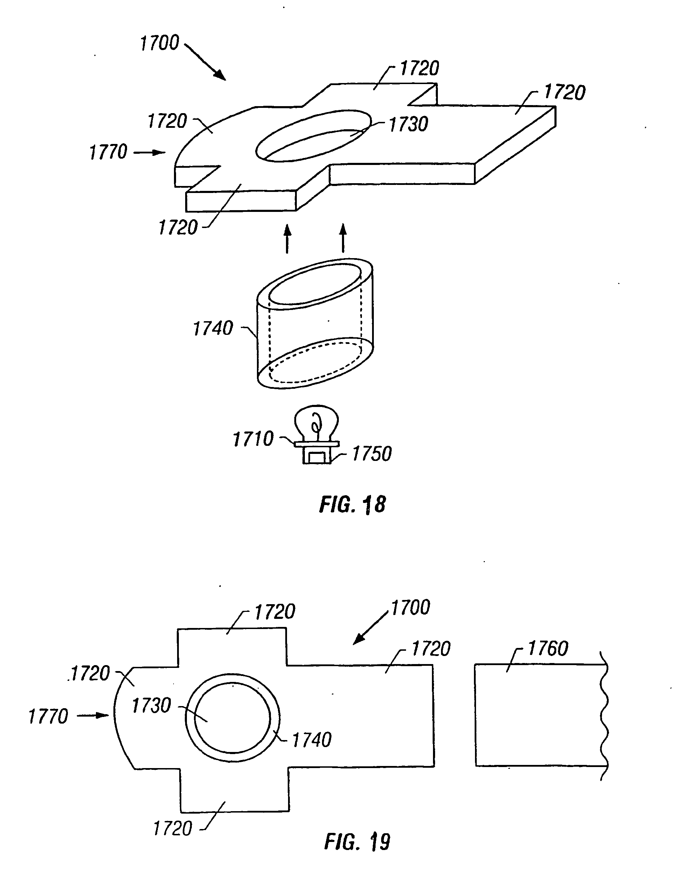

Referring to Figs. 18-25, a DLS may incorporate optical waveguide structures that provide an integrated structure for collecting and distributing light from a light source. These structures may be referred to as waveguide collars. In general, a waveguide collar 1700 collects light from a light source 1710 and divides the light among output arms 1720 that extend from the light source 1710. The arms lie in an azimuthal plane relative to the light source.

For example, as shown in Fig. 18, the waveguide collar 1700 is a planar structure in the shape of a cross. The collar 1700 has four output arms 1720 and an opening 1730 in the center for accommodating a light source 1710. The number of arms may vary. The light source 1710 may be enclosed in a cylindrical sleeve 1740, which is inserted into the opening 1730 in the waveguide collar 1700. Light from the light source passes through the sleeve 1740 into the collar 1700, where it is divided into the output arms 1720. The cylindrical sleeve 1740 may be used with any of the waveguide collar configurations discussed below. Several waveguide collars 1700 may be stacked on a single sleeve 1740 to form a multi-layer structure. In addition, the cylindrical sleeve 1740 may be connected to or integrated with the base 1750 of the light source as discussed below.

The output arms 1720 of the waveguide collar 1700 may be connected to other components in the DLS or may have integrated output elements, such as a lens 1770. The lens 1770, which is located at the end of the output arm 1720, transmits light away from the waveguide to provide illumination for the interior or exterior of the vehicle. Waveguides 1760 may be connected to the output arms 1720, as shown in Fig. 19. Integrated installation elements, such as the snaps, claws and detents described above with respect to Fig. 13, may be used to connect the waveguides to the output arms.

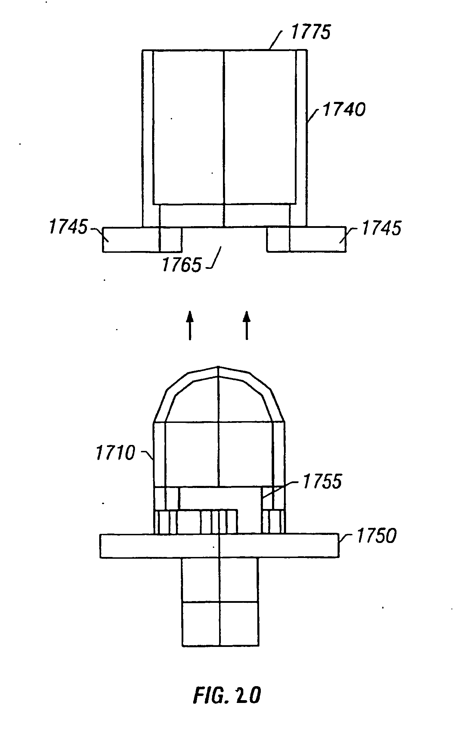

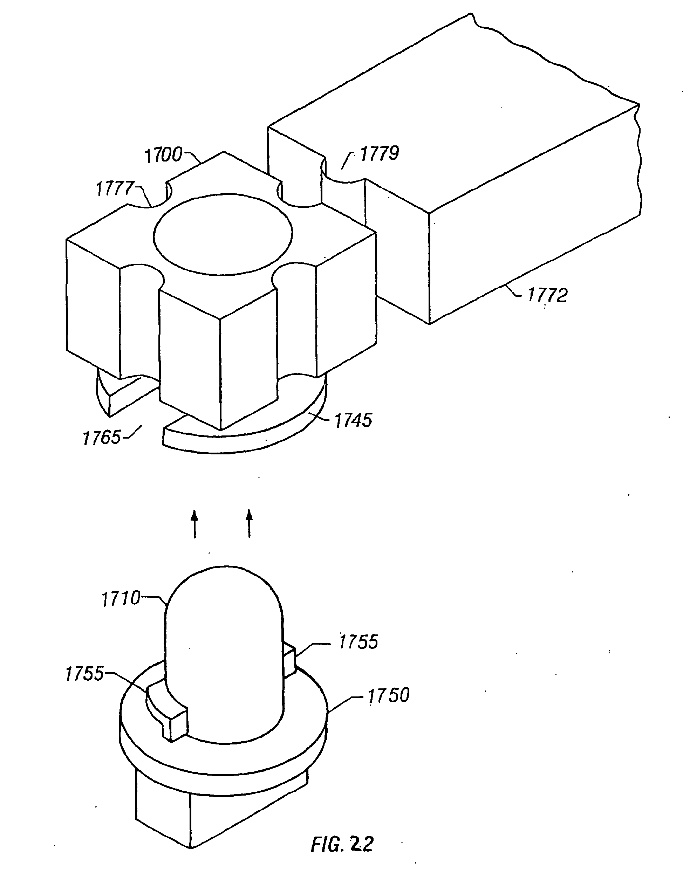

As shown in Figs. 20 and 21, the cylindrical sleeve 1740 may have a rim 1745 for connection to the lamp base 1750. The lamp base has locking tabs 1755 which may be inserted into the gap 1765 between the rim 1745 portions of the sleeve 1740. The lamp base is twisted so the locking tabs engage the rim 1745 and hold the light source 1710 in place within the sleeve 1740. Alternatively, as shown in Fig. 22, a waveguide collar 1700 may have an integrated rim 1745 for connection to a lamp base 1750. The collar may have alignment notches 1777 configured to accommodate alignment tabs 1779 on the end of a connecting waveguide 1772.

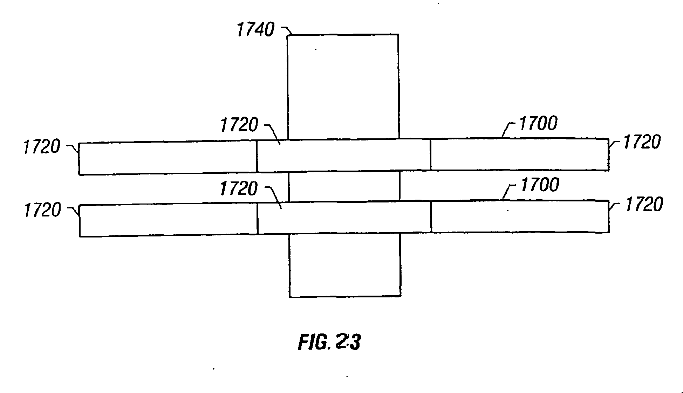

The sleeve 1740 provides several advantages. For example, as shown in Fig. 23, multiple waveguide collars 1700 can be stacked on a single sleeve 1740, allowing light to be distributed through multiple collars 1700 with a single light source 1710. Such a configuration increases system design flexibility.

In addition, the upper portion of the sleeve 1740 reflects a portion of the light from the light source 1710 through internal reflection so that the light exits from the top 1775 of the sleeve. Light entering the sleeve at an angle less than the critical angle passes through the sleeve and enters the waveguide collar 1700 (the angle being measured with respect to a direction perpendicular to the sleeve wall). Light entering the sleeve at an angle greater than the critical angle is internally reflected by the sleeve. In this manner, the sleeve forms a hybrid lighting system that allows the light source 1710 to function as a source for both a direct lighting function (through the top of the sleeve) and a distributed lighting function (through a network connected to a waveguide collar).

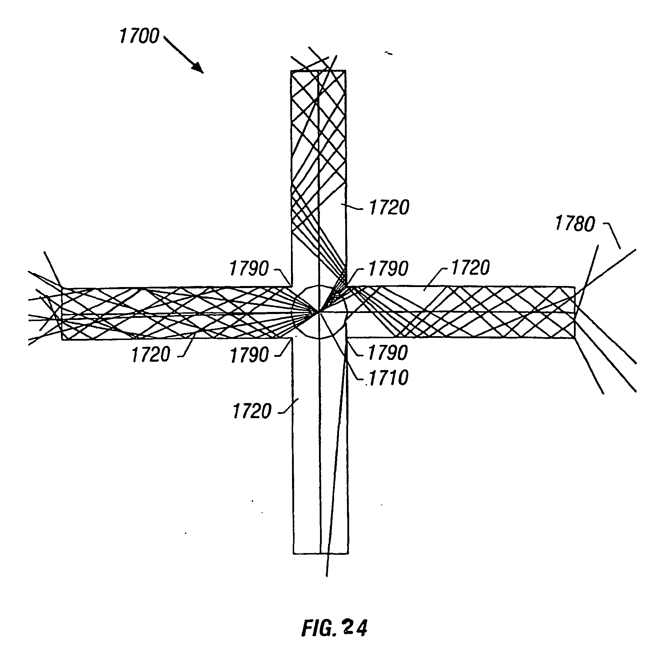

Fig. 24 shows a light ray diagram for a four-arm waveguide collar 1700. For reasons of clarity, only a portion of the light rays 1780 from the light source 1710 are traced in the diagram. Ordinarily, light emanates uniformly from the light source 1710 in the plane of the waveguide collar (the azimuthal plane). The waveguide collar collects light from the light source and divides it among the four output arms 1720. In this example, the vertices 1790 are positioned relative to the light source 1710 so that essentially all of the light collected is distributed into one of the output arms 1720 (light does not escape at the vertices 1790).

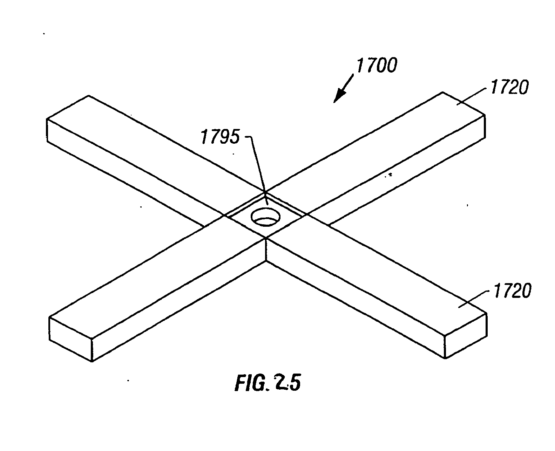

Fig. 25 shows a perspective view of a four-arm waveguide collar 1700. The central portion 1795 may be tapered or stepped to improve the light collection efficiency with respect to the light source.

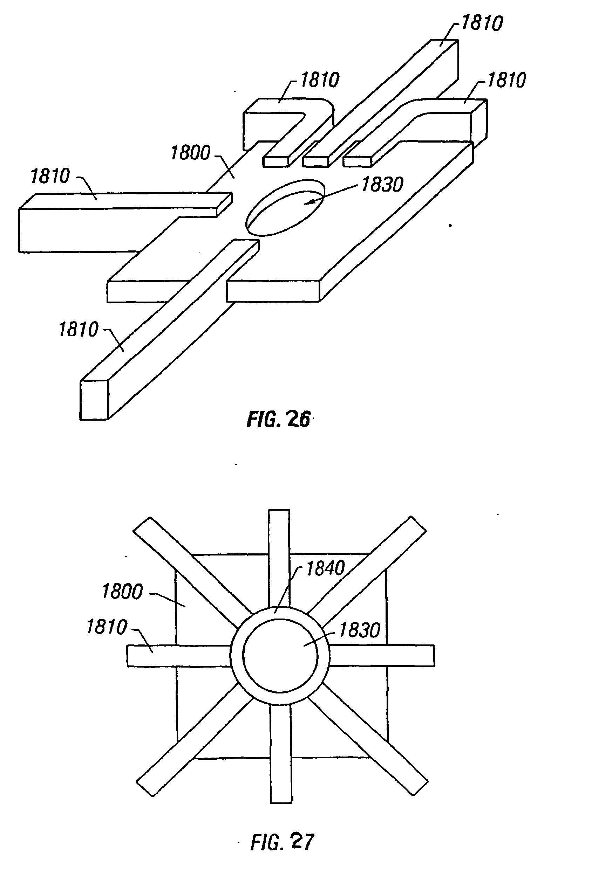

Figs. 26 and 27 show alternative configurations of a waveguide collar 1800. The collar 1800 is a planar structure that surrounds and collects light from a light source (not shown) positioned in an opening 1815 in the center of the collar 1800. Waveguides 1810 may be mounted on the top surface of the collar 1800 or may be embedded in the collar as shown. The waveguides 1810 may be positioned radially with respect to the light source, as shown in Fig. 27. A cylindrical sleeve 1840 may surround the light source, as described above. The collar 1800 serves as a hybrid lighting element by providing both a direct lighting function (in the direction perpendicular to the plane of the collar) and a distributed lighting function (through the connected waveguides).

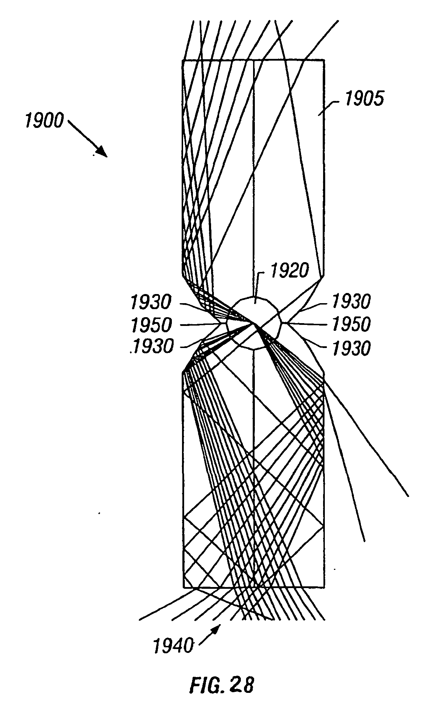

Fig. 28 shows another alternative configuration of a waveguide collar 1900. The collar has two arms 1905 that extend from opposite sides of the light source opening 1920. The sides of the output arms include convex, curved surfaces 1930 at the center of the collar 1900. As shown by the light ray tracings 1940, the curved surfaces 1930 at the vertices 1950 improve light collection by reflecting light that would have been transmitted out of the sides of the collar (if the sides were not curved) and directing the light into the two output arms.

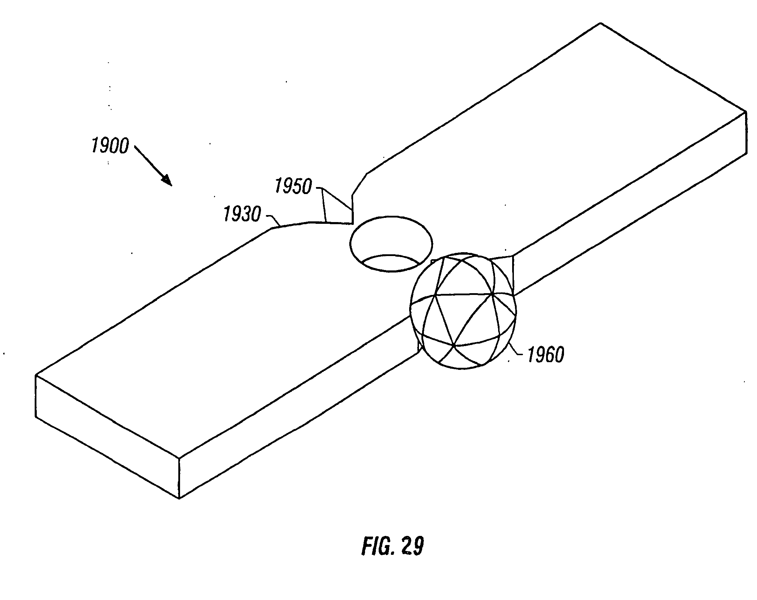

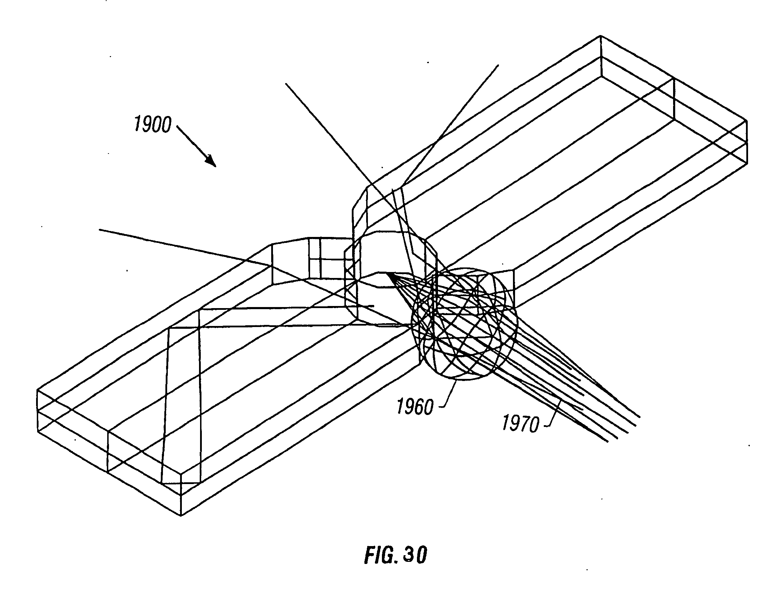

As shown in Figs. 29 and 30, optical components, such as lens 1960, may be positioned at the vertices 1950 of the curved surfaces 1930. The lens 1960 may be formed along with the rest of the waveguide collar in a single injection molding step. The lens 1960 may have a variety of shapes, such as cylindrical, spherical, parabolic, Fresnel, or polyhedral. The lens 1960 receives light through the side facing the light source, focuses light through internal reflection, and outputs the light through the opposite side. The output light rays 1970, as shown in Fig.30, are focused and, as such, tend to converge at a derived distance from the lens 1960.

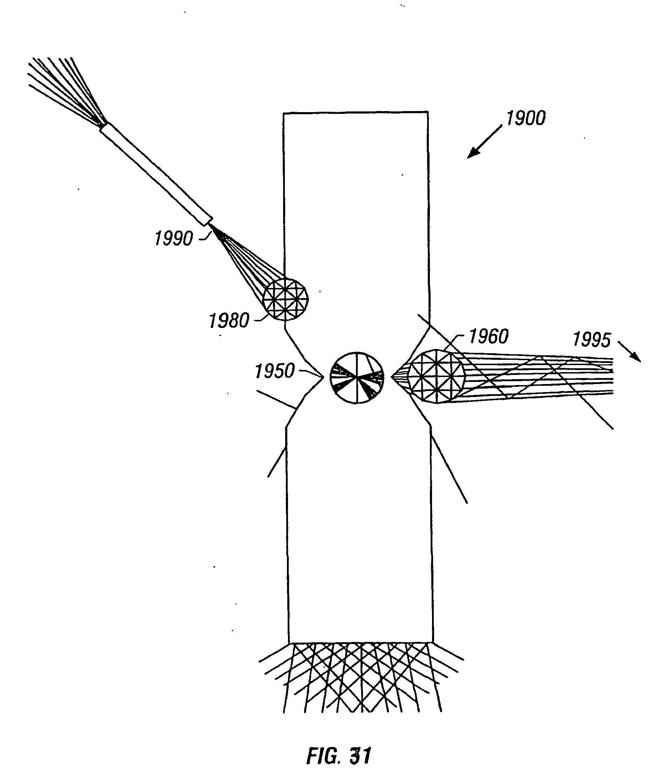

As shown in Fig. 31, a lens 1980 also may be positioned at points on the waveguide collar other than the vertices 1950.

The light output by the lenses 1960 and 1980 may be focused, for example, on the input of a waveguide 1990 or on a target location 1995 on the interior or exterior of a vehicle, such as a keyhole. The molded integral lenses provide several advantages. For example, a waveguide collar with a lens serves as a hybrid lighting element, i.e., the collar performs both a direct lighting function and a distributed lighting function. In addition, system complexity and manufacturing costs may be reduced by having a one-step, injection molding manufacturing process.

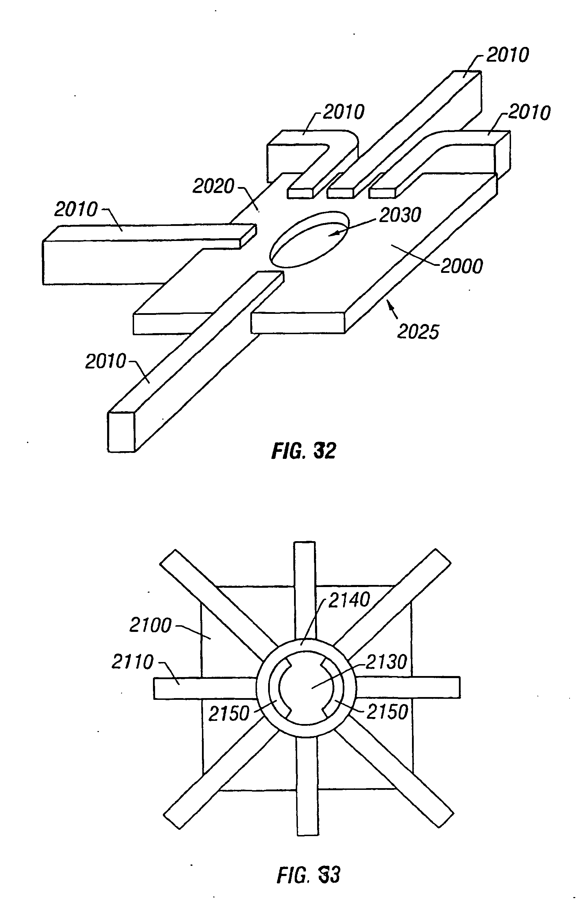

Fig. 32 shows another waveguide structure 2000 for collecting and distributing light from a light source. The structure 2000 is generally similar in appearance to the waveguide collar 1800 of Figure 26 in that, of collar form, it surrounds and collects light from a light source (not shown) positioned in an opening 2030 of a planar element that has embedded waveguides 2010 that extend from top 2020 and bottom 2025 surfaces. The structure 2000 provides an efficient means for distributing the light collected from the light source into the waveguides without providing a direct lighting facility from the surfaces unlike collar 1800 so that, for example, the structure 2000 may be mounted in the door panel or head liner of a vehicle. The waveguides 2010 may carry light to various light output points on the door panel or head liner for providing interior vehicle illumination.

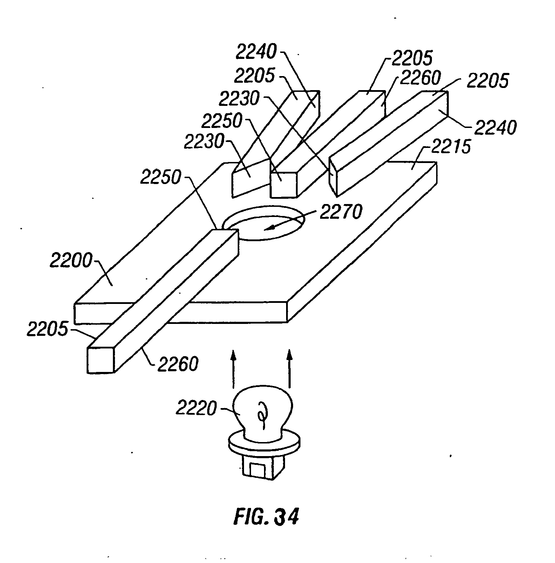

The structure 2000 may be formed integrally with the waveguides 2010 and may, for example, be formed of plastic or acrylic using injection molding. The waveguides 2010 may be embedded in the waveguide structure 2000, as shown in Fig. 32, or may be raised, i.e., extending from the top surface 2020, as discussed below with reference to Fig. 34.

Insofar as the collar structure 2000 is similar to the collar 1800 of Fig. 26 an analogous structure 2100 is shown in Fig. 33 that, in a manner similar to collar 1900 of Fig. 27, has waveguides 2110 that are positioned radially with respect to the light source opening 2130. The waveguides may be raised or embedded. A cylindrical sleeve 2140 may surround the light source, as described above. In addition, tabs 2150 may extend into the opening 2130. The tabs 2150 are configured to mate with locking tabs of a light source to hold the light source in position in the opening 2130.

Fig. 34 shows another similar waveguide structure 2200 in which waveguides 2205 are mounted on a top surface 2215 and extend radially from the light source 2220. The input faces 2230 of some of the waveguides are angled with respect to the sides 2240 of the waveguides, i.e., the input faces 2230 form a non-orthogonal angle with respect to the sides 2240 of the waveguide. The input faces 2250 of other waveguides are orthogonal to the sides 2260 of the waveguide. The light source 2215 is inserted into an opening 2270 in the structure 2200.

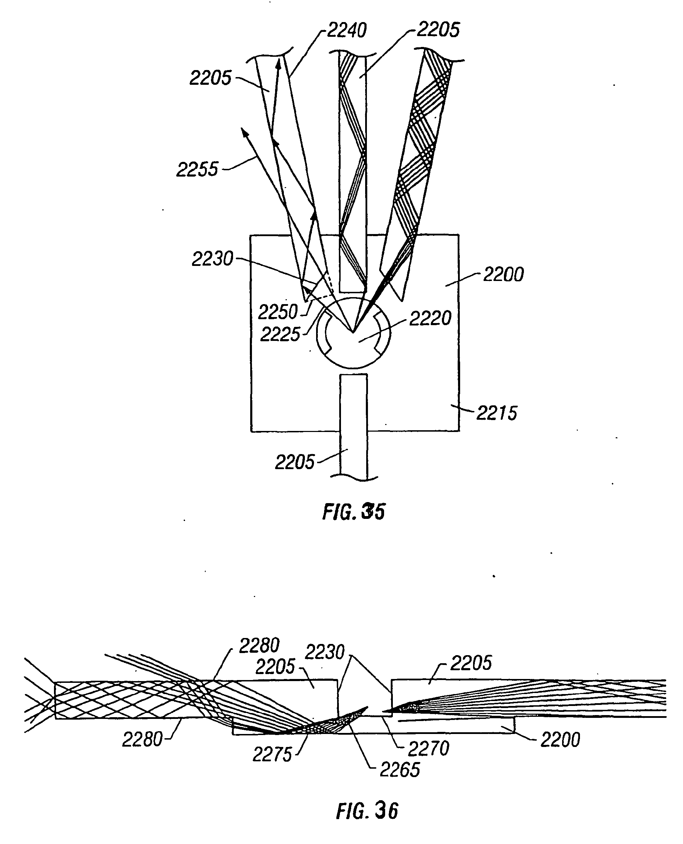

Fig. 35 shows a partial light ray diagram for the structure 2200. A light ray 2225 enters the face 2230 of the waveguide 2205. As discussed above, the face 2230 forms a non-orthogonal angle with respect to the side 2240 of the waveguide 2205. If the input face 2230 were not angled, as indicated by the dashed lines 2250, a light ray 2255 could enter the side 2240 of the waveguide and pass through the opposite side of the waveguide instead of being internally reflected. Hence, this configuration helps reduce the amount of light entering the side 2240 of the waveguide rather than the input face 2230. It also allows the waveguides 2205 to be positioned closer together, which prevents light from passing through gaps between the waveguides.

Fig. 36 shows a side light ray diagram for the waveguide structure 2200. Some of the light from the light source, which is positioned in the opening 2270 in the structure 2200, directly enters the input face 2230 of the waveguide 2205. A portion 2265 of the light from the light source may be reflected from the bottom surface 2275 of the structure and may enter the waveguide 2205 through a side surface 2280.

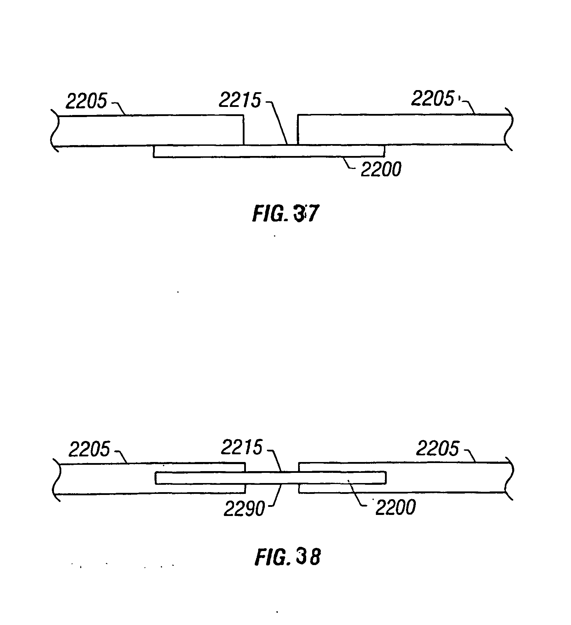

As shown in Fig. 37, the waveguides may be attached to the top surface 2215 of the structure 2200 by adhesive. They also may be attached by installation elements integrated into the structure and waveguides, such as snaps. Alternatively, the waveguides 2205 and structure 2200 may be formed from a solid piece of material, for example, injection-molded plastic or acrylic.

As shown in Fig. 38, the waveguides 2205 may extend from the top 2215 and bottom 2290 surfaces of the structure 2200 rather than only from the top surface. The waveguides 2205 may be integrally formed with the structure 2200 from a solid piece of material, or the waveguides 2205 may be fastened to the structure 2200 with snaps or adhesive.

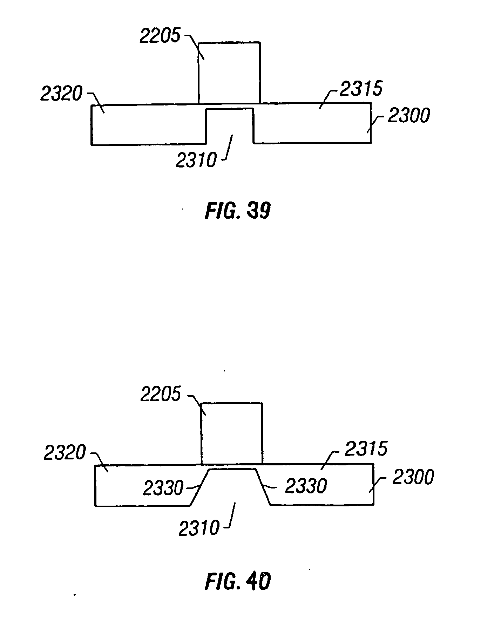

Figs. 39 and 40 show end views of a waveguide mounted on a planar waveguide structure 2300. In Fig. 39, a channel 2310 is formed beneath the waveguide 2205 along the length of the waveguide 2205. The channel 2310 increases the isolation between the waveguide 2205 and the structure 2300 to reduce light loss from the waveguide 2205 and increase efficiency. The channel 2310 may be narrower than the waveguide 2205 and the depth of the channel 2310 may be less than the thickness of the structure 2300 in order to maintain structural support between sections 2315 and 2320 of the structure on either side of the waveguide 2205. As shown in Fig. 40, the sides 2330 of the channel 2310 may be inclined (i.e., the width of the channel may increase in a direction away from the waveguide) to improve structural integrity.

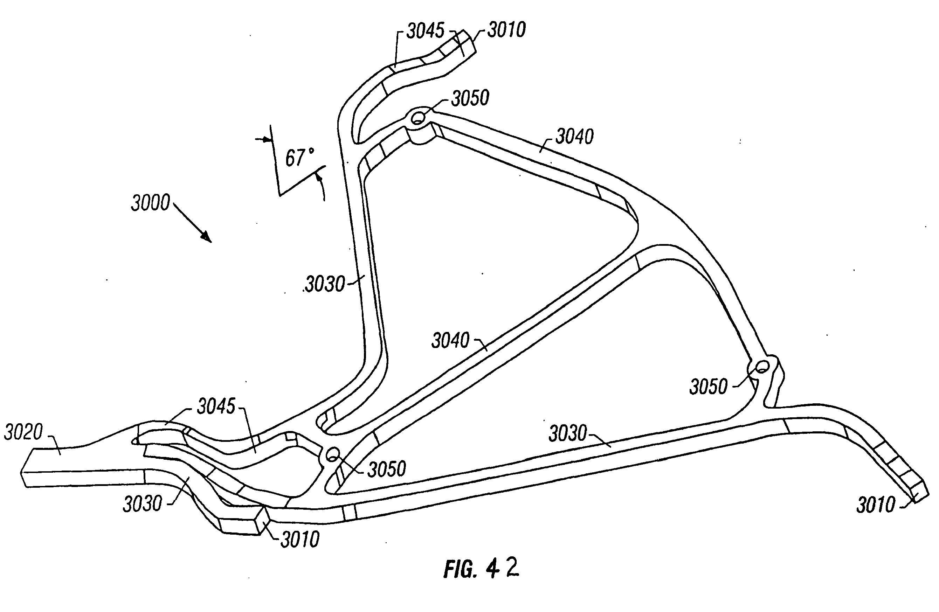

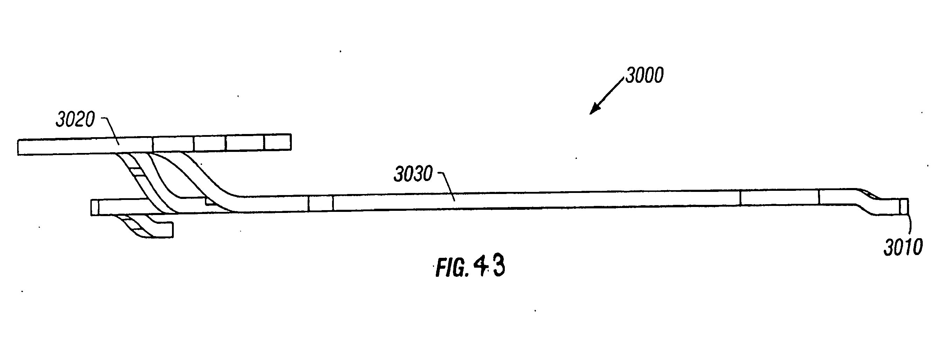

In accordance with the invention, a DLS is used in a vehicle door panel 2950, as shown in Fig. 41 at 3000, to distribute light from a light source 2960 to lighting outputs 3010 for the vehicle door. As shown in Figs. 42 and 43, a trunk waveguide 3020 splits light from the light source 2960 into branch waveguides 3030 that propagate the light to the lighting outputs 3010 of the door panel 2950.1

A variety of output structures may be used at the lighting outputs 3010. For example, a waveguide may have a conical end portion (as shown in Fig. 11) with a lens element. A leaky waveguide bend (as shown in Fig. 15) also may be used.

The waveguide assembly 3000 is supported on the door panel 2900 by an intersecting web of support arms 3040 that extend between the waveguides 3030. The support arms 3040 may be formed of the same material as the waveguides 3030 (e.g., injection molded plastic) and may be fabricated as a single unit. Alternatively, the support arms 3040 may be connected by an adhesive or may have integrated installation elements, such as snaps (as shown in Figs. 13 and 14).

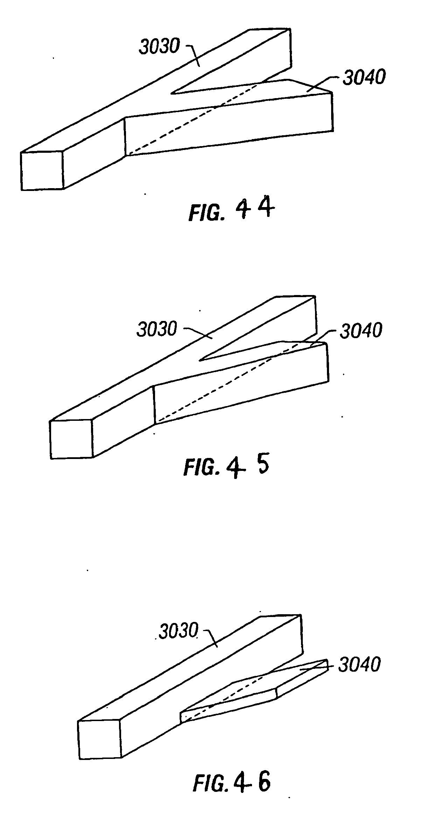

As shown in Fig. 44, the support arms 3040 may be approximately the same thickness (in the direction perpendicular to the plane of the door panel) and width (in a direction parallel to the plane of the door panel) as the waveguides 3030.

Alternatively, the support arms 3040 may be narrower in width (Fig. 45) or thinner (Fig. 46) than the waveguides 3030 to minimize the amount of light entering the support arms 3040.

Referring again to Fig. 42, the support arms 3040 form an angle of about 67° with the branch waveguides 3030 (with respect to the direction the light is traveling) so that the amount of light entering the support arms 3040 is minimized. As discussed in "Analysis of Waveguide Geometries at Bends and Branches for the Directing of Light," waveguides with branch angles greater than 45° transmit only a small percentage of the light from the main branch. For example, a waveguide with a branch angle of 67.5° transmits approximately 1.3% of the light from the main branch.

The branch waveguides 3030 may include bends 3045 near the lighting outputs 3010 or at other points along the waveguides (e.g., near the trunk waveguide 3020) so that the waveguide assembly 3000 can conform to the shape of the door panel 2900.

The bends 3045 have bend ratios greater than 3:1 to minimize undesirable light leakage. Such a configuration reduces unaesthetic light emissions from cracks or gaps in the door panel 2900 structure.

Installation holes 3050 are positioned along the support arms 3040 so that the waveguide assembly 3000 can be installed in the door panel 2900. Screws, posts or snaps may be used to hold the waveguide assembly 3000 in position on the door panel 2900.

The door panel DLS provides several advantages. For example, it eliminates the need for electrical wiring, multiple light bulbs, connectors, and PC boards, within the door panel.

The single, high reliability light source in the DLS can meet all of the lighting requirements for particular door lighting functions. The source may be accessible through an access panel in the door, so that it can be easily replaced without removing the door panel. In addition, the light source may be located in another position within the vehicle, such as under the dashboard. Light may be carried from the light source to the door panel waveguide assembly through a waveguide, waveguide joint or optical fiber that passes from the vehicle body into the doors. Such a configuration reduces the electrical wiring required between the vehicle body and the doors, which reduces complexity and manufacturing costs. In addition, as discussed above, the door panel waveguide panel may be formed as a single piece of injection molded plastic, which further reduces manufacturing costs.

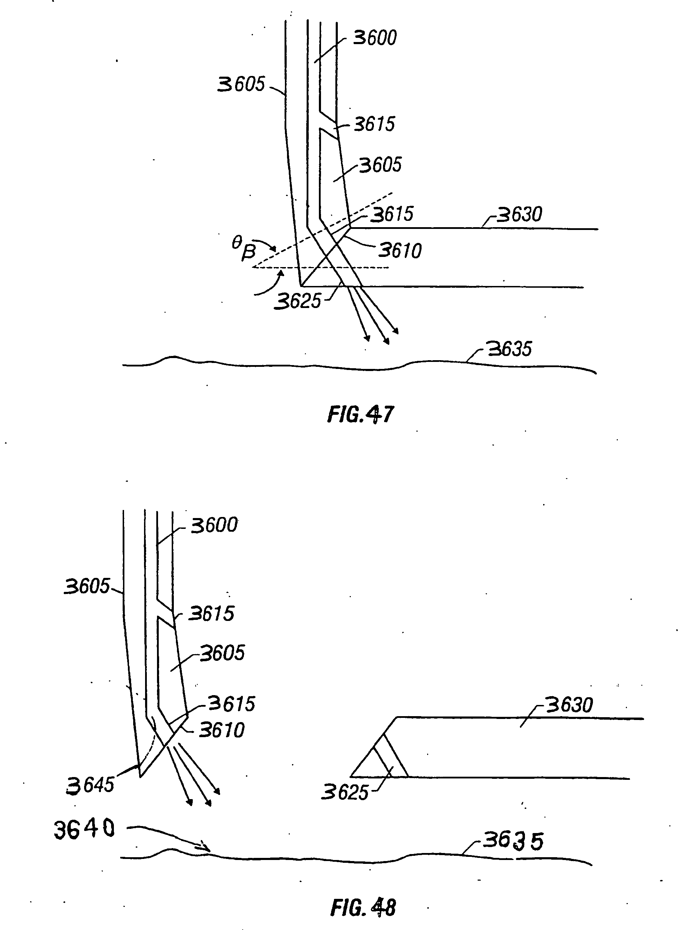

The DLS suitable for a door panel may be used to provide a variety of other lighting functions for a vehicle associated with such vehicle door. These include exterior lighting, such as security/puddle lights. Referring to Figs.47 and 48, a waveguide 3600 may be installed in a vehicle door 3605 to provide a security/puddle light. The waveguide 3600 runs from a light source, such as to 2960 (Fig 41) the bottom surface or edge 3610 of the door 3605. The waveguide 3600 may have a lens formed at its output end. A waveguide branch 3615 may be used to implement an interior door light. When the door 3605 is closed, as in Fig. 47, a door waveguide section 3615 connects to a waveguide 3625 that passes through the floor 3630. The floor waveguide section 3625 provides a security light that illuminates the area 3635 underneath the vehicle. The ends of the floor waveguide section 3625 may have integrally formed lenses. When the door 3605 is open, as shown in Fig. 48, the door waveguide 3600 provides a puddle light that illuminates the ground 3640 between the open door and the vehicle. The bend 3645 in the door waveguide section 3615 may have a bend angle ($\theta_B$) of, for example, 20°. The bend 3645 helps to direct the output of the waveguide 3600 to the desired area.

## Claims

**1.** An optical waveguide assembly (3000) suitable for distributing light within a vehicle door panel (2950), comprising a hub portion, or trunk waveguide, (3020) arranged to be connected to receive light from a light source (2960) and propagate received light through internal reflection to a plurality of waveguides (3030) extending therefrom, said waveguides being arranged to extend in use with a said vehicle door panel (3010), to lighting outputs of the door panel, and **characterised by** support arms (3040) connected to, and extending between, the waveguides (3030) operable to support the waveguides with respect to the panel in use.

**2.** An optical waveguide assembly as claimed in claim 1 wherein the hub portion is in the form of a waveguide collar (1795, 2000,2200) comprising a solid, planar block of material, having a central portion configured to accommodate and surround said light source (1710, 2230) and output branches (1720, 2010, 2205) extending from the central portion comprising said plurality of waveguides.

**3.** An optical waveguide assembly as claimed in claim 1 wherein the hub portion is in the form of a cylindrical sleeve (1740, 1840, 2140), configured to accommodate and receive light from said light source (1710, 1830, 2130), and a waveguide collar comprising a solid, planar block of material, having a central portion configured to accommodate and surround said cylindrical sleeve and output branches (1720, 1810, 2105) extending from the central portion comprising said plurality of waveguides.

**4.** The optical waveguide assembly of claim 1 **characterised by** a compact illuminator (900, 920, 970) as the light source, the compact illuminator comprising a housing (905, 974) having reflective interior surfaces (910), a bulb (915, 970) positioned within the housing, and an optical waveguide output port (930, 976) configured to hold said trunk waveguide (320) in position to receive light from the bulb.

5. The optical waveguide assembly of claim 4 **characterised in that** the compact illuminator comprises
   a housing (950) having open ends (930) configured to receive waveguides, and
   a reflector (905) positioned within the housing.

6. The optical waveguide assembly of claim 5 **characterised in that** the reflector (905) comprises
   open end portions (930),
   a central portion between the end portions,
   a light source (915) positioned within the central portion, and side walls (925) extending between the end portions and at least partially enclosing the central portion, the side walls protruding inward toward the light source.

7. The optical waveguide assembly (3000) of any one of claims 1 to 5 **characterised in that** each support arm (3040) extends from a waveguide (3030) at an angle, with respect to the direction of light transmission along the waveguide, of about 67°.

8. The optical waveguide assembly of any one of claims 1 to 5 **characterised in that** the waveguides (3030) and support arms (3040) are formed from a single piece of solid material.

9. The optical waveguide assembly of claim 8 **characterised in that** the solid material is injection molded plastics material.

10. The optical waveguide assembly as claimed in any one of claims 1 to 9 **characterised by** lighting output elements (3010) positioned at the ends of said plurality of waveguides (3030).

11. The optical waveguide assembly of claim 10 **characterised by** an optical waveguide output element (1400) as the lighting output element, the waveguide output element comprising an input face and a transmission portion, extending from the input face widening at an end to form a conical end portion (1425) having a convex lens (1430) at an end of the conical end portion.

12. The optical waveguide assembly of claim 10 **characterised by** comprising a waveguide bend (1505) as the lighting output element.

13. The optical waveguide assembly of claim 12 **characterised in that** the waveguide bend has a bend ratio that is less than 3:1.

14. The optical waveguide assembly of claim 13 **characterised in that** the waveguide bend has a bend ratio that is less than 1:1.

15. A vehicle door panel (2950) **characterised by** the optical waveguide assembly (3000) of any one of claims 1 to 14 and wherein the panel supports the support arms of the assembly with respect thereto and includes at least one lighting output (3010) of the vehicle door panel to which the waveguides of the assembly extend from the output of the hub or trunk waveguide.

16. A vehicle including a door (3605) with a bottom door surface (3610) that meets a floor surface of the vehicle (3630) when the door is closed, the floor surface being displaced from the underside of the vehicle and **characterised by** a door panel (2950) as claimed in claim 15.

17. A vehicle as claimed in claim 16 **characterised by** an optical waveguide assembly (3000) in which at least one of the plurality of waveguides (3600) extends to the bottom surface of the door (3610) and the floor portion (3630) optionally includes a waveguide section (3625) extending to the vehicle underside, disposed to meet the bottom surface of the door (3610) when closed so that light may pass from the door waveguide and floor section of the vehicle to illuminate an area (3635) beneath the vehicle and, when the door is opened, to illuminate an area (3640) beneath the door.

**Patentansprüche**

1. Optische Wellenleiteranordnung (3000), geeignet zum Verteilen von Licht innerhalb einer Fahrzeugtürkonsole (2950), umfassend einen Zentralstellenabschnitt oder Blockwellenleiter (3020), welcher angeordnet ist, um verbunden zu werden, um Licht von einer Lichtquelle (2960) zu empfangen und empfangenes Licht über Totalreflexion an eine Vielzahl von Wellenleitern (3030) weiterzuleiten, die sich davon erstrecken, wobei die Wellenleiter angeordnet sind, sich bei Verwendung mit einer Fahrzeugtürkonsole (3010) zu Lichtausgaben der Türkonsole zu erstrecken, und **dadurch gekennzeichnet, dass** Tragearme (3040) mit den Wellenleitern (3030) verbunden sind und sich dazwischen betriebsfähig erstrecken, um die Wellenleiter in Bezug auf die in Verwendung stehende Konsole zu tragen.

2. Optische Wellenleiteranordnung nach Anspruch 1, wobei der Zentralstellenabschnitt die Form eines Wellenleiterkragens (1795, 2000, 2200) aufweist, umfassend einen festen, ebenen Materialblock, welcher einen mittleren Abschnitt aufweist, welcher ausgelegt ist, um die Lichtquelle (1710, 2230) aufzunehmen und zu umgeben, und Ausgabezweige (1720, 2010, 2205), die sich von dem mittleren Abschnitt erstrecken, umfassend die Vielzahl von Wellenleitern.

3. Optische Wellenleiteranordnung nach Anspruch 1, wobei der Zentralstellenabschnitt die Form einer zylindrischen Hülse (1740, 1840, 2140) aufweist, die ausgelegt ist, um Licht von der Lichtquelle (1710, 1830, 2130) aufzunehmen und zu empfangen, und einen Wellenleiterkragen, welcher einen festen, ebenen Materialblock umfasst, welcher einen mittleren Abschnitt aufweist, welcher ausgelegt ist, um die zylindrische Hülse und Ausgabezweige (1720, 1810, 2105) aufzunehmen und zu umgeben, die sich von dem mittleren Abschnitt erstrecken, umfassend die Vielzahl von Wellenleitern.

4. Optische Wellenleiteranordnung nach Anspruch 1, **gekennzeichnet durch** einen kompakten Beleuchter (900, 920, 870) als die Lichtquelle, wobei der kompakte Beleuchter umfasst:

   ein Gehäuse (905, 974), welches reflektierende innere Oberflächen (910) aufweist,
   eine Glühbirne (915, 970), die sich innerhalb des Gehäuses befindet, und
   einen optischen Wellenleiterausgabeanschluss (930, 976), der ausgelegt ist, um den Blockwellenleiter (320) in Position zu halten, um Licht von der Glühbirne zu empfangen.

5. Optische Wellenleiteranordnung nach Anspruch 4, **dadurch gekennzeichnet, dass** der kompakte Beleuchter umfasst:

   ein Gehäuse (950), welches offene Enden (930) aufweist, die ausgelegt sind, um Wellenleiter aufzunehmen, und
   einen Reflektor (905), der sich innerhalb des Gehäuses befindet.

6. Optische Wellenleiteranordnung nach Anspruch 5, **dadurch gekennzeichnet, dass** der Reflektor (905) umfasst:

   offene Endabschnitte (930),
   einen mittleren Abschnitt zwischen den Endabschnitten,
   eine Lichtquelle (915), die sich innerhalb des mittleren Abschnittes befindet, und
   Seitenwände (925), die sich zwischen den Endabschnitten erstrecken und mindestens teilweise den mittleren Abschnitt umschließen, wobei die Seitenwände nach innen in Richtung der Lichtquelle vorragen.

7. Optische Wellenleiteranordnung (3000) gemäß irgendeinem der Ansprüche 1 bis 5, **dadurch gekennzeichnet, dass** sich jeder Tragearm (3040) von einem Wellenleiter (3030) in einem Winkel von ungefähr 67° in Bezug auf die Richtung der Lichtübertragung entlang des Wellenleiters erstreckt.

8. Optische Wellenleiteranordnung gemäß irgendeinem der Ansprüche 1 bis 5, **dadurch gekennzeichnet, dass** die Wellenleiter (3030) und Tragearme (3040) aus einem Stück festen Materials gebildet werden.

9. Optische Wellenleiteranordnung gemäß Anspruch 8, **dadurch gekennzeichnet, dass** das feste Material ein Spritzguß-Kunststoffmaterial ist.

10. Optische Wellenleiteranordnung gemäß irgendeinem der Ansprüche 1 bis 9, **gekennzeichnet durch** Lichtausgabe-Elemente (3010), die sich an den Enden der Vielzahl von Wellenleitern (3030) befinden.

**11.** Optische Wellenleiteranordnung gemäß Anspruch 10, **gekennzeichnet durch** ein optisches Wellenleiterausgabeelement (1400) als das Lichtausgabeelement, wobei das Wellenleiterausgabeelement eine Eingabefläche und einen Übertragungsabschnitt umfasst, der sich von der Eingabefläche erstreckt, wobei er sich an einem Ende weitet, um einen konischen Endabschnitt (1425) zu bilden, der eine konvexe Linse (1430) an einem Ende des konischen Endabschnittes aufweist.

**12.** Optische Wellenleiteranordnung gemäß Anspruch 10, **dadurch gekennzeichnet, dass** sie einen Wellenleiterbogen (1505) als das Lichtausgabeelement umfasst.

**13.** Optische Wellenleiteranordnung gemäß Anspruch 12, **dadurch gekennzeichnet, dass** der Wellenleiterbogen ein Krümmungsverhältnis aufweist, das weniger als 3:1 beträgt.

**14.** Optische Wellenleiteranordnung gemäß Anspruch 13, **dadurch gekennzeichnet, dass** der Wellenleiterbogen ein Krümmungsverhältnis aufweist, das weniger als 1:1 beträgt.

**15.** Fahrzeugtürkonsole (2950), **gekennzeichnet durch** die optische Wellenleiteranordnung (3000) gemäß irgendeinem der Ansprüche 1 bis 14 und wobei die Konsole die Tragearme der Anordnung in Bezug darauf trägt, und mindestens eine Lichtausgabe (3010) der Fahrzeugtürkonsole beinhaltet, zu welcher sich die Wellenleiter der Anordnung von der Ausgabe der Zentralstelle oder des Blockwellenleiters erstrecken.

**16.** Fahrzeug, welches eine Tür (3605) mit einer unteren Türfläche (3610) beinhaltet, die eine Bodenfläche des Fahrzeuges (3630) berührt, wenn die Tür geschlossen ist, wobei die Türfläche von der Unterseite des Fahrzeuges versetzt ist, und **gekennzeichnet durch** eine Türkonsole (2950) gemäß Anspruch 15.

**17.** Fahrzeug gemäß Anspruch 16, **gekennzeichnet durch** eine optische Wellenleiteranordnung (3000), in welcher sich mindestens einer von der Vielzahl der Wellenleiter (3600) zu der unteren Fläche der Tür (3610) erstreckt, und der Bodenabschnitt (3630) optional einen Wellenleiterabschnitt (3625) beinhaltet, der sich zu der Fahrzeugunterseite erstreckt, der angeordnet ist, um die untere Fläche (3610) der Tür zu berühren, wenn sie geschlossen ist, so dass Licht von dem Türwellenleiter und Bodenabschnitt des Fahrzeuges verlaufen kann, um einen Bereich (3635) unterhalb des Fahrzeuges zu beleuchten, und wenn die Tür geöffnet ist, einen Bereich (3640) unterhalb der Tür zu beleuchten.

**Revendications**

**1.** Ensemble de guides d'ondes optiques (3000) convenant pour distribuer de la lumière à l'intérieur d'un panneau de porte de véhicule (2950), comprenant une partie de noyau central, ou guide d'ondes principal (3020), agencée pour être reliée de façon à recevoir de la lumière d'une source de lumière (2960) et propager de la lumière reçue par l'intermédiaire d'une réflexion interne vers une pluralité de guides d'ondes (3030) s'étendant à partir de celui-ci, lesdits guides d'ondes étant disposés de façon à s'étendre en utilisation avec undit panneau de porte de véhicule (3010), vers des sorties d'éclairage du panneau de porte, et **caractérisé par** des bras de support (3040) reliés aux guides d'ondes (3030) et s'étendant entre ceux-ci, pouvant être mis en oeuvre pour supporter les guides d'ondes par rapport au panneau, en utilisation.

**2.** Ensemble de guides d'ondes optiques selon la revendication 1, dans lequel la partie de noyau central est sous forme d'une collerette de guide d'ondes (1795, 2000, 2200) comprenant un bloc plan, plein, de matériau comportant une partie centrale configurée pour recevoir et entourer ladite source de lumière (1710, 2230) et des branches de sortie (1720, 2010, 2205) s'étendant depuis la partie centrale, comportant ladite pluralité de guides d'ondes.

**3.** Ensemble de guides d'ondes optiques selon la revendication 1, dans lequel la partie de noyau central est sous forme d'un manchon cylindrique (1740, 1840, 2140), configuré pour utiliser et recevoir de la lumière provenant de ladite source de lumière (1710, 1830, 2130), et une collerette de guide d'ondes comprenant un bloc plan, plein, de matériau comportant une partie centrale configurée pour loger et entourer ledit manchon cylindrique et des branches de sortie (1720, 1810, 2105) s'étendant depuis la partie centrale comprenant ladite pluralité de guides d'ondes.

**4.** Ensemble de guides d'ondes optiques selon la revendication 1, **caractérisé par** un illuminateur compact (900, 920, 970) en tant que source de lumière, l'illuminateur compact comprenant
un boîtier (905, 974) comportant des surfaces intérieures de réflexion (910), une ampoule (915, 970) positionnée à l'intérieur du boîtier, et un orifice de sortie de guide d'ondes optique (930, 976) configuré pour maintenir ledit guide d'ondes principal (320) en position pour recevoir de la lumière depuis l'ampoule.

5. Ensemble de guides d'ondes optiques selon la revendication 4, **caractérisé en ce que** l'illuminateur compact comprend
un boîtier (950) comportant des extrémités ouvertes (930) configurées pour recevoir des guides d'ondes, et
un réflecteur (905) positionné à l'intérieur du boîtier.

6. Ensemble de guides d'ondes optiques selon la revendication 5, **caractérisé en ce que** le réflecteur (905) comprend des parties d'extrémités ouvertes (930),
une partie centrale entre les parties d'extrémités,
une source de lumière (915) positionnée à l'intérieur de la partie centrale, et des parois latérales (925) s'étendant entre les parties d'extrémités et entourant au moins partiellement la partie centrale, les parois latérales dépassant vers l'intérieur en direction de la source de lumière.

7. Ensemble de guides d'ondes optiques (3000) selon l'une quelconque des revendications 1 à 5, **caractérisé en ce que** chaque bras de support (3040) s'étend à partir d'un guide d'ondes (3030) suivant un angle, par rapport à la direction de transmission de la lumière le long du guide d'ondes, d'environ 67°.

8. Ensemble de guides d'ondes optiques selon l'une quelconque des revendications 1 à 5, **caractérisé en ce que** les guides d'ondes (3030) et les bras de support (3040) sont formés à partir d'un seul morceau de matériau plein.

9. Ensemble de guides d'ondes optiques selon la revendication 8, **caractérisé en ce que** le matériau plein est une matière plastique moulée par injection.

10. Ensemble de guides d'ondes optiques selon l'une quelconque des revendications 1 à 9, **caractérisé par** des éléments de sortie d'éclairage (3010) positionnés aux extrémités de ladite pluralité de guides d'ondes (3030).

11. Ensemble de guides d'ondes optiques selon la revendication 10, **caractérisé par** un élément de sortie de guide d'ondes optique (1400) en tant qu'élément de production d'éclairage, l'élément de sortie de guide d'ondes comprenant une face d'entrée et une partie de transmission, s'étendant depuis la face d'entrée en s'élargissant à une extrémité pour former une partie d'extrémité conique (1425) ayant une lentille convexe (1430) à une extrémité de la partie d'extrémité conique.

12. Ensemble de guides d'ondes optiques selon la revendication 10, **caractérisé en ce qu'**il comprend un coude de guide d'ondes (1505) en tant qu'élément de production d'éclairage.

13. Ensemble de guides d'ondes optiques selon la revendication 12, **caractérisé en ce que** le coude de guide d'ondes présente un taux de courbure qui est inférieur à 3:1.

14. Ensemble de guides d'ondes optiques selon la revendication 13, **caractérisé en ce que** le coude de guide d'ondes présente un taux de courbure qui est inférieur à 1:1.

15. Panneau de porte de véhicule (2950) **caractérisé par** l'ensemble de guides d'ondes optiques (3000) selon l'une quelconque des revendications 1 à 14 et dans lequel le panneau supporte les bras de support de l'ensemble par rapport à celui-ci et comprend au moins une sortie d'éclairage (3010) du panneau de porte de véhicule vers laquelle les guides d'ondes de l'ensemble s'étendent depuis la sortie du guide d'ondes de noyau central ou principal.

16. Véhicule comprenant une porte (3605) avec une surface de porte inférieure (3610) qui rencontre une surface de plancher du véhicule (3630) lorsque la porte est fermée, la surface de plancher étant décalée par rapport au-dessous du véhicule et **caractérisée par** un panneau de porte (2950) selon la revendication 15.

17. Véhicule selon la revendication 16, **caractérisé par** un ensemble de guides d'ondes optiques (3000) dans lequel au moins un guide d'ondes de la pluralité de guides d'ondes (3600) s'étend vers la surface inférieure de la porte (3610) et la partie de plancher (3630) comprend optionnellement une section de guide d'ondes (3625) s'étendant vers le dessous du véhicule, disposée de façon à rencontrer la surface inférieure de la porte (3610) lorsqu'elle est fermée de sorte que de la lumière puisse passer par le guide d'ondes de porte et la section de plancher du véhicule pour illuminer une zone (3635) en dessous du véhicule et, lorsque la porte est ouverte, pour illuminer une zone (3640) en dessous de la porte.

900

910

905

915

220

FIG. 1

920

905

935

935

935

930

910

915

930

925

FIG. 2

FIG. 3

FIG. 4

965   955   915   950   956   951   916
920   921

EP 1 066 172 B1

970

972

974

978

982

984

976

980

984

**FIG. 5**

*FIG. 6*

*FIG. 7*

*FIG. 8*

*FIG 9*

FIG. 10

FIG. 11

FIG. 12

20

*1405* *1420* *1400* *1410*

*1415* *1425*

*1410* *1435* *1430*

**FIG. 13**

*1440*

*1445*

*1450* *1455*

**FIG. 14**

*1500* *1505* *r* *1510*

**FIG. 15**

1610

1610

1610

1600

1610

1605

*FIG. 16*

FIG. 17

**FIG. 18**

**FIG. 19**

FIG. 20

1775

1745

1765

1710

1755

1755

1750

FIG. 21

FIG. 22

*1740*

*1720*  *1700*

*1720*  *1720*

*1720*  *1720*

*1720*  *1700*

*1720*  *1720*

FIG. 23

FIG. 24

FIG. 25

1810

1810

1810

1810

1800

1830

1810

**FIG. 26**

1840

1800

1810

1830

**FIG. 27**

FIG. 28

*FIG. 29*

*FIG. 30*

FIG. 31

**FIG. 32**

**FIG. 33**

**FIG. 34**

FIG. 35

FIG. 36

2205 ~                    2215 ~                                    2205 '~

2200

**FIG. 37**

2205 ~                    2215 ~                                    2205 ~

2290 ⌐                        ⌐ 2200

**FIG. 38**

2205

2320          2315
              2300

2310

**FIG. 39**

2205

2320          2315
2330    2330   2300

2310

**FIG. 40**

FIG. 41

FIG. 42

FIG. 43

3030

3040

FIG. 4 4

3030

3040

FIG. 4 5

3030

3040

FIG. 4 6

**FIG.47**

**FIG.48**